# FASCICULE DE BREVET EUROPEEN

(11) **EP 2 735 886 B1**
(45) Date de publication et mention de la délivrance du brevet: **30.08.2017**
(21) Numéro de dépôt: 13005521.3
(22) Date de dépôt: 27.11.2013
(51) Int. Cl.: G01S 17/10, G01S 17/89, G01S 7/486

(54) **Procédé d'imagerie 3D**
3D-Bildanzeigeverfahren
3D imaging method

(30) Priorité: 27.11.2012 FR 1203193
(43) Date de publication de la demande: 28.05.2014
(73) Titulaire: I.S.L. Institut Franco-Allemand de Recherches de Saint-Louis, 68301 Saint-Louis Cedex (FR)
(72) Inventeur: Matwyschuk, Alexis, F, 68350 Brunstatt (FR)

(56) Documents cités:
- WO-A2-2008/152647
- US-A1- 2011 157 354
- US-B1- 6 512 838

## Description

L'invention concerne le domaine technique de l'imagerie 3D active, plus précisément celui de l'acquisition d'images 3D d'une scène par découpe en plans successifs.

L'imagerie active par découpe en plans successifs est un procédé d'imagerie active 3D qui permet d'obtenir une image 3D d'une scène à étudier en découpant ladite scène en plusieurs plans, chacun situé à une profondeur différente dans la scène à étudier. L'image finale 3D de la scène à étudier est obtenue par le regroupement des zones ou des objets des plans de ladite scène, reflétées par les impulsions lumineuses. La découpe en plusieurs plans est réalisée par une émission d'impulsions lumineuses qui se réfléchissent sur la scène à étudier puis sont captées par un dispositif utilisé pour réaliser le processus d'imagerie. Chaque impulsion captée donne les zones reflétées de la scène à un temps de vol déterminé. La variation de profondeur des plans dans la scène à étudier est obtenue en faisant varier le temps de vol auquel les impulsions lumineuses sont captées.

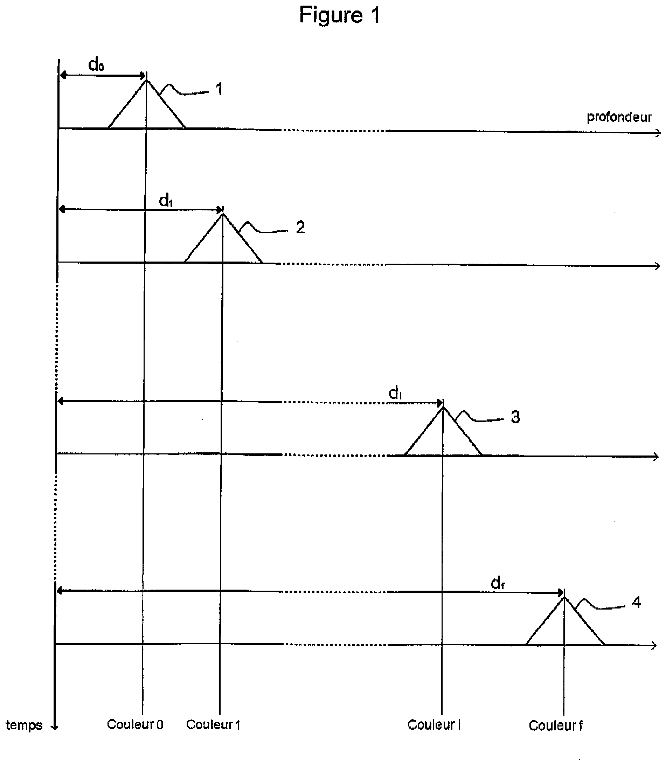

La figure 1 montre un schéma représentant le principe d'un tel procédé. Une première impulsion lumineuse 1 est émise puis réfléchie par la scène à étudier. On capte l'impulsion lumineuse 1 réfléchie avec une matrice de capteurs optoélectroniques à un temps de vol correspondant à une réflexion sur un objet compris dans un plan situé à une profondeur dₒ dans la scène à étudier. Puis, une seconde impulsion lumineuse 2 est émise et est réfléchie par la scène à étudier. On capte l'impulsion lumineuse 2 réfléchie avec la matrice de capteurs optoélectroniques à un temps de vol correspondant à une réflexion sur un objet compris dans un plan situé à une profondeur d₁ dans la scène à étudier. On émet ainsi n impulsions lumineuses en faisant varier le temps de vol nécessaire avant leur capture par la matrice de capteurs optoélectroniques.

A ce titre on connaît le brevet FR2018457 qui décrit un dispositif et un procédé d'imagerie active 3D par découpe en plans successifs. Ce procédé comporte les étapes suivantes :
- émettre une impulsion laser avec un générateur d'impulsion laser en direction d'un objet à étudier ;
- ouvrir un obturateur avec un retard calculé par rapport à l'émission de l'impulsion laser, permettant ainsi de capter l'impulsion laser réfléchie par l'objet à étudier avec l'obturateur à un temps de vol de l'impulsion laser déterminé, et d'obtenir un plan de l'objet à étudier situé à une distance connue de l'obturateur ;

- enregistrer l'image obtenue par l'obturateur dans une mémoire ;
- recommencer les étapes précédentes en faisant varier le retard à l'ouverture de l'obturateur, permettant ainsi de faire varier le temps de vol des impulsions laser réfléchies, et d'obtenir des plans de l'objet à étudier situés à des distances différentes de l'obturateur ;
- transmettre l'ensemble des images enregistrées par la mémoire à un écran, permettant ainsi d'afficher une image 3D de l'objet à étudier en temps réel.

On connaît également le document « A Low Noise, Laser-Gated Imaging System for Long Range Target » qui décrit un dispositif et un procédé d'imagerie active 3D afin d'identifier des cibles à longue portée. Le procédé décrit dans ce document comprend les étapes suivantes :
- prendre une image thermique de la scène à étudier avec un dispositif d'imagerie infrarouge ;
- désigner une cible dans cette image thermique ;
- émettre, en direction de la cible désignée, une impulsion laser avec un émetteur d'impulsion laser ;
- capter l'impulsion laser avec un capteur de laser et mesurer le temps de vol nécessaire à cette impulsion pour faire l'aller-retour jusqu'à la cible ;
- émettre en direction de la cible une impulsion laser avec l'émetteur d'impulsion laser ;
- capter l'impulsion laser avec une matrice de capteurs optoélectroniques au temps de vol mesuré précédemment ;

Ce procédé permet d'obtenir une image d'un plan précis de la scène à étudier. Ce plan contient la cible désignée qui est à une distance connue du dispositif.

On connait enfin WO2008/152647 qui divulgue un procédé permettant de déterminer une distance à un objet. Le procédé consiste à exposer, en premier lieu, un premier élément de détection optique d'un pixel optique à une impulsion laser rétroréfléchie pendant un intervalle de temps initial pour obtenir un premier niveau de sortie. Puis, à exposer un second élément de détection optique du pixel optique à l'impulsion laser rétroréfléchie à un intervalle de temps successif pour obtenir un second niveau de sortie. Enfin, à calculer la distance à l'objet à partir des premier et second niveaux de sortie. Pour un réseau de détecteur, une imagerie tridimensionnelle peut être réalisée par un procédé à deux étapes dont la première consiste à déterminer si un objet est présent dans une sous-plage de distance de pixel. Les systèmes d'imagerie 3D active, et plus particulièrement les systèmes d'imagerie 3D par découpe en plans successifs, réalisent l'image 3D de la scène à étudier en additionnant l'ensemble des images des plans. Chaque image complète est stockée entièrement dans une mémoire. Le nombre de mémoires correspond au nombre de plans successifs. Après l'acquisition de l'image du dernier plan de la scène à étudier, l'ensemble des images est additionné en prenant en compte la profondeur de la scène de chacune des images pour réaliser l'image 3D. Ces systèmes sont dépendants de la fréquence vidéo des images pour obtenir l'image 3D.

Le but de l'invention est de diminuer la quantité de mémoire nécessaire, de limiter les moyens de traitement et de fournir directement, sans être dépendant de la fréquence vidéo, une image.

La solution apportée est un procédé d'imagerie 3D d'une scène à étudier mis en oeuvre par un dispositif comportant :
- des moyens de génération d'une impulsion lumineuse,
- une matrice de Cₙ capteurs optoélectroniques aptes chacun à générer un signal représentatif de l'intensité de l'impulsion lumineuse réfléchie qu'il a reçu,
- des moyens de traitement de ce signal,
- une mémoire tampon dont une adresse particulière Aₙ est associée à chacun des capteurs Cₙ,
ce procédé étant décomposé en f sous-procédés qui comportent chacun les étapes suivantes :
- émettre une impulsion lumineuse en direction de la scène à étudier avec les moyens de génération d'une impulsion lumineuse;
- capter l'impulsion lumineuse reflétée par la scène à étudier à un temps de vol déterminé avec la matrice de capteurs optoélectroniques aptes chacun à générer un signal représentatif de l'intensité de l'impulsion lumineuse qu'il a reçu ;
- intégrer chaque signal généré représentatif de l'intensité de l'impulsion lumineuse en fonction de la durée de l'impulsion lumineuse ;
- comparer, avec lesdits moyens de traitement, le niveau du signal intégré de l'intensité lumineuse captée par chaque capteur à une valeur seuil prédéfinie ;
- stocker dans la mémoire tampon, aux adresses associées aux capteurs ayant capturé et intégré l'impulsion lumineuse reflétée avec une valeur supérieure à ladite valeur seuil, une couleur associée au temps de vol de l'impulsion lumineuse captée ;
- bloquer les adresses de la mémoire tampon stockant cette couleur ;
ce procédé étant caractérisé en ce qu'il comporte les étapes suivantes :
- les sous procédés sont exécutés les uns après les autres ;
- changer le temps de vol auquel l'impulsion lumineuse reflétée par la scène à étudier est captée pour chaque sous-procédé et donc la couleur associée;
- transférer les données de la mémoire tampon dans la mémoire image à la fin du dernier sous-procédé.

Ainsi, l'image 3D finale comporte le même nombre de pixels que le nombre de capteurs optoélectroniques de la matrice. La position des pixels correspond à la position des capteurs optoélectroniques. La couleur associée au temps de vol stockée dans la mémoire tampon à l'adresse associée au capteur optoélectronique est transférée au pixel associé à l'image 3D finale.

Selon une caractéristique supplémentaire, pour au moins l'un des sous procédés, n impulsions lumineuses sont émises et n impulsions lumineuses reflétées par la scène à étudier à un temps de vol déterminé sont captées et intégrées afin d'avoir un signal au dessus d'une valeur seuil, avec n>1.

Selon une caractéristique additionnelle permettant d'optimiser le temps d'acquisition d'une image 3D complète, le nombre n d'impulsions émises dans un sous procédé d'acquisition des n impulsions lumineuses reflétées d'un plan profond dans la scène à étudier sont exécutés est supérieur ou égal au nombre m d'impulsions émises dans un sous procédé d'acquisition de ces m impulsions lumineuses reflétées d'un plan moins profond.

Selon une autre caractéristique permettant d'optimiser le temps d'acquisition d'une image 3D complète, le nombre d'impulsions émises d'un sous-procédé est fonction de la profondeur du plan dont ledit sous-procédé permet l'acquisition via les impulsions lumineuses reflétées.

Selon une caractéristique permettant de limiter les perturbations que peuvent apporter les impulsions laser émises lors de l'acquisition précédente des impulsions lumineuses reflétées d'un plan, les sous-procédés sont exécutés dans un ordre décroissant de la profondeur des plans à étudier de la scène.

D'autres avantages et caractéristiques apparaîtront dans la description de plusieurs modes de réalisation de l'invention au regard des figures annexées parmi lesquelles :
- la figure 2 est un schéma représentant le principe d'un procédé d'imagerie selon un premier mode de réalisation ;
- la figure 3 est un schéma représentant le principe d'un procédé d'imagerie selon un second mode de réalisation ;
- la figure 4 est un schéma représentant le principe d'un procédé d'imagerie selon un troisième mode de réalisation ;
- les figures 5a, 5b, 5c et 5d, sont des schémas représentant l'état d'une mémoire lors de l'acquisition d'une image avec un procédé selon ces modes de réalisation.

Dans les descriptions des différents modes de réalisation de l'invention, l'impulsion lumineuse utilisée est une impulsion laser. Mais n'importe quel autre type d'impulsion lumineuse peut être également utilisé.

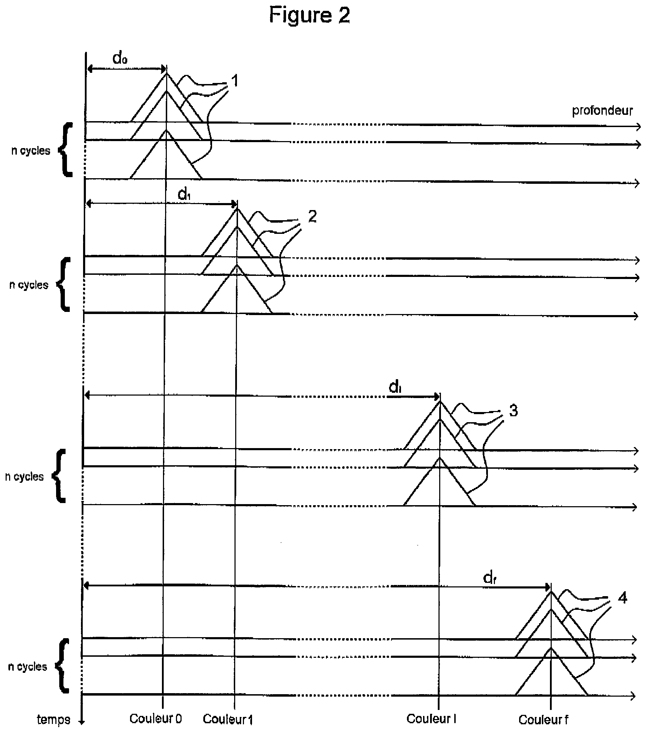

La figure 2 montre un schéma représentant le principe du procédé d'imagerie selon un premier mode de réalisation. Le procédé suivant ce premier mode de réalisation est mis en ouevre par un dispositif comportant :
- des moyens de génération d'une impulsion lumineuse,
- une matrice de Cₙ capteurs optoélectroniques aptes chacun à générer un signal représentatif de l'intensité de l'impulsion lumineuse réfléchie qu'il a reçu,
- des moyens de traitement de ce signal,
- une mémoire tampon dont une adresse particulière Aₙ est associée à chacun des capteurs Cₙ.

Il est divisé en f sous-procédés. Le premier sous-procédé comporte les étapes suivantes :
- émettre, avec les moyens de génération d'une impulsion lumineuse, une impulsion laser 1 vers une scène à étudier ;
- capter l'impulsion laser 1 réfléchie par la scène à étudier avec la matrice de capteurs optoélectroniques aptes chacun à générer un signal représentatif de l'intensité de l'impulsion lumineuse qu'il a reçu ;
- intégrer chaque signal généré représentatif de l'intensité de l'impulsion lumineuse sur la durée de l'impulsion lumineuse ;

Mais dans certain cas, une seule impulsion laser 1 peut ne pas suffire pour obtenir un niveau de signal intégré supérieur à une valeur seuil. Ainsi, le nombre d'impulsions laser est répété n fois afin que le niveau du signal intégré soit supérieur au niveau d'une valeur seuil. Le nombre n d'impulsions laser est défini pour obtenir le meilleur compromis entre temps d'acquisition des impulsions lumineuses reflétées dudit plan et perceptibilité de l'objet situé dans le plan situé à une profondeur dₒ.
- comparer, avec les moyens de traitement, le niveau du signal intégré de l'intensité lumineuse de l'impulsion laser 1 réfléchie captée à une valeur seuil prédéfinie pour chaque capteur de la matrice ;
- enregistrer pour chaque capteur ayant détecté un niveau du signal intégré supérieur à la valeur seuil et à une adresse qui lui est associée dans la mémoire tampon, une couleur associée à la profondeur dₒ du plan contenant l'objet sur lequel s'est réfléchie les impulsions laser 1 ;
- bloquer les adresses de la mémoire tampon dans laquelle une couleur est enregistrée ;

Les f-1 autres sous-procédés composant le procédé selon ce premier mode de réalisation de l'invention sont similaires au premier sous-procédé. Ils ne diffèrent que par une augmentation, entre chaque sous-procédé, du temps de vol et de la couleur associée. Cette différence de temps de vol permet d'obtenir des impulsions lumineuses reflétées de plan situés à des profondeurs allant de d₀ à d_{f}, avec d₀<d_{f}. Le nombre f de sous-procédé est déterminé en fonction de la finesse de l'image 3D finale désirée. Plus f est élevé, plus le nombre de plans constituant l'image 3D est élevé, mais plus le temps d'acquisition d'une image 3D finale sera long.

A la fin de tous les f sous-procédés suivant le premier mode de réalisation de l'invention, la mémoire tampon contient une image de la scène à étudier composée de pixels possédant les f couleurs différentes possibles ou restant noir si le niveau du signal intégré a toujours été inférieur à la valeur seuil. Chacune de ces couleurs représente une profondeur précise de la scène où le niveau du signal intégré a été supérieur à la valeur seuil variant entre d₀ et d_{f}, avec d₀<d_{f}. L'ordre d'acquisition des images des différents plans est réalisé du plan le moins profond dans la scène à étudier vers le plan le plus profond. Le procédé comporte une étape de transfère des données comprises dans la mémoire tampon dans une mémoire image. Cette mémoire image permet d'afficher l'image directement sur un écran où chaque couleur correspond à une profondeur de la scène ou bien d'appliquer des procédés annexes de traitement d'image sur les données ainsi transférées.

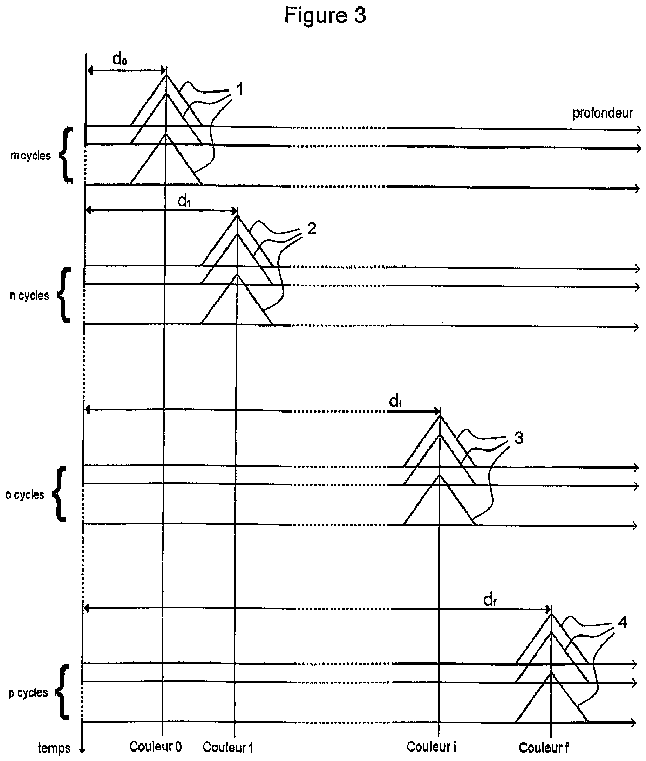

La figure 3 montre un schéma représentant le principe du procédé d'imagerie selon un second mode de réalisation. Le procédé suivant ce second mode de réalisation est semblable au procédé selon le premier mode de réalisation. Il n'en diffère que par le fait que le nombre d'impulsions lumineuses émises dans chaque sous-procédé n'est pas répété un même nombre de fois. Ainsi le premier sous-procédé émet m impulsions lumineuses, le second sous-procédé émet n impulsions lumineuses,..., le i^{ème} sous-procédé émet o impulsions lumineuses,..., et le f^{ème} sous-procédé émet p impulsions lumineuses, avec m≠n≠o≠p. Le nombre de répétition est différent car les plans les plus profonds dans la scène à étudier demandent plus d'impulsions laser que les plans proches afin d'obtenir un niveau de signal intégré des impulsions lumineuses reflétées au dessus de la valeur seuil. On détermine donc le nombre de répétition m, n, et p de chacun des sous-procédés tel que m<n<o<p. Ce mode de réalisation de l'invention permet d'adapter le nombre de répétition au réel besoin d'illumination de chacun des plans, et ainsi d'optimiser le temps d'acquisition d'une image complète en 3D en n'émettant pas davantage d'impulsions lumineuses alors qu'un nombre réduit d'impulsions lumineuses permet de rendre déjà perceptibles les objets situés dans le plan de la scène à étudier.

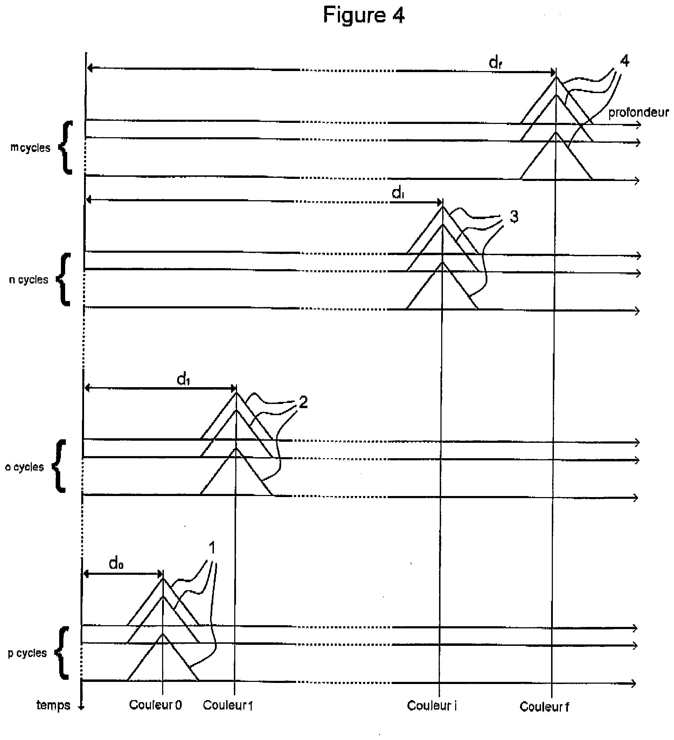

La figure 4 montre un schéma représentant le principe du procédé d'imagerie selon un troisième mode de réalisation. Le procédé suivant ce troisième mode de réalisation est semblable au procédé selon le second mode de réalisation. Il n'en diffère que par une acquisition des impulsions lumineuses reflétées des différents plans, réalisée du plan le plus profond dans la scène à étudier vers le plan le moins profond. Cet ordre d'acquisition du plan le plus profond vers le moins profond permet de limiter les perturbations que peuvent apporter les impulsions laser émises lors de l'acquisition précédente des impulsions lumineuses reflétées d'un plan, permettant ainsi d'obtenir l'image 3D finale la plus proche de la réalité.

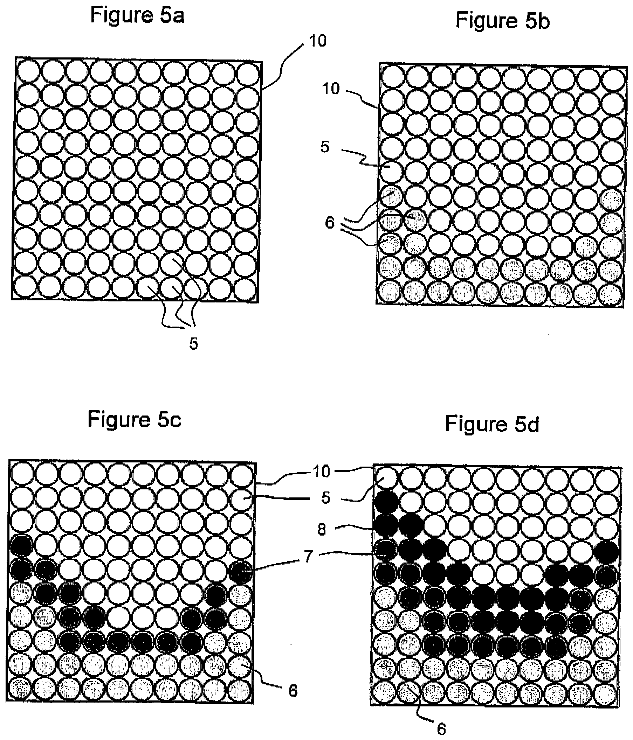

Les figures 5a, 5b, 5c et 5d montrent l'évolution de l'état de la mémoire tampon lors de l'acquisition en trois sous procédés d'une image 3D d'une scène à étudier en utilisant un procédé suivant n'importe lequel des modes de réalisation de l'invention décrits précédemment.

La figure 5a représente l'état d'une mémoire 10 avant que le procédé d'acquisition des impulsions lumineuses reflétées ne soit commencé. La mémoire 10 est composée de plusieurs adresses 5 vierges,

La figure 5b représente l'état de la mémoire 10 après que le premier sous-procédé ait été réalisé. La mémoire 10 est maintenant composée d'adresses 6 qui stockent une première couleur correspondant à une profondeur de la scène et d'adresses 5 vierges. Les adresses 6 correspondent aux capteurs optoélectroniques qui ont mesuré un niveau de signal intégré des impulsions lumineuses reflétées supérieur à la valeur seuil prédéfinie, en l'occurrence la valeur du bruit du capteur.

La figure 5c représente l'état de la mémoire 10 après que le deuxième sous-procédé ait été réalisé. Le nombre d'adresses 6 est identique par rapport à celui de la figure 5b. Les nouvelles adresses 7 stockent une deuxième couleur correspondant à une deuxième profondeur de la scène. Les adresses 7 correspondent aux capteurs optoélectroniques qui ont mesuré un niveau de signal intégré des impulsions lumineuses reflétées supérieur à la valeur du bruit.

La figure 5d représente l'état de la mémoire 10 après que le troisième sous-procédé ait été réalisé. Le nombre d'adresses 6 et d'adresses 7 est identique par rapport à celui de la figure 5c. Les nouvelles adresses 8 stockent une troisième couleur correspondant à une troisième profondeur de la scène. Les adresses 8 correspondent aux capteurs optoélectroniques qui ont mesuré un niveau de signal intégré des impulsions lumineuses reflétées supérieur à la valeur du bruit.

La mémoire 10 est maintenant composée d'adresses 5 vierges qui vont rester noir, d'adresses 6 avec la première couleur, d'adresses 7 avec la seconde couleur et d'adresses 8 avec la troisième couleur. En transférant la mémoire tampon dans une mémoire image on peut afficher l'image directement sur un écran. Chaque couleur sur l'écran correspond à une profondeur de la scène.

## Revendications

1. Procédé d'imagerie 3D d'une scène à étudier mis en oeuvre par un dispositif comportant des moyens de génération d'une impulsion lumineuse, une matrice de Cₙ capteurs optoélectroniques aptes chacun à générer un signal représentatif de l'intensité de l'impulsion lumineuse réfléchie qu'il a reçu, des moyens de traitement de ce signal, une mémoire tampon dont une adresse particulière Aₙ est associée à chacun des capteurs Cₙ et une mémoire image, procédé **caractérisé en ce qu'**il comporte :
- une étape consistant à définir f temps de vol différents correspondant à f différentes profondeurs du plan à étudier et associer une couleur particulière à chacun des f temps de vol, puis, successivement, pour chacun de ces temps de vol définis, assurer le sous procédé suivant :
- émettre une impulsion lumineuse (1, 2, 3, 4) en direction de la scène à étudier avec les moyens de génération d'une impulsion lumineuse ;
- capter l'impulsion lumineuse reflétée par la scène à étudier, seulement pour ce temps de vol, avec la matrice de capteurs optoélectroniques aptes chacun à générer un signal représentatif de l'intensité de l'impulsion lumineuse qu'il a reçu ;
- intégrer chaque signal généré représentatif de l'intensité de l'impulsion lumineuse en fonction de la durée de l'impulsion lumineuse (1, 2, 3, 4) ;
- comparer, avec lesdits moyens de traitement, le niveau du signal intégré de l'intensité lumineuse captée par chaque capteur à une valeur seuil prédéfinie ;
- stocker dans la mémoire tampon (10), aux adresses associées aux capteurs ayant capturé et intégré l'impulsion lumineuse reflétée avec une valeur supérieure à ladite valeur seuil, une valeur représentative de la couleur associée à ce temps de vol de l'impulsion lumineuse captée ;
- bloquer les adresses de la mémoire tampon (10) stockant cette valeur représentative de cette couleur associée à ce temps de vol ;
- transférer les données de la mémoire tampon dans la mémoire image à la fin du dernier sous-procédé et afficher cette mémoire image sur un écran.

2. Procédé d'imagerie 3D d'une scène à étudier suivant la revendication 1, **caractérisé en ce que** dans chaque sous-procédé, une seule impulsion lumineuse est émise par les moyens de génération et une seul capte une seule impulsion lumineuse reflétée est captée par la matrice de capteurs optoélectronique.

3. Procédé d'imagerie 3D d'une scène à étudier suivant la revendication 1, **caractérisé en ce que** pour au moins l'un des sous procédés, n impulsions lumineuses sont émises et n impulsions lumineuses reflétées par la scène à étudier à un temps de vol déterminé sont captées et intégrées, avec n> 1.

4. Procédé d'imagerie 3D d'une scène à étudier suivant la revendication 3, **caractérisé en ce que** le nombre n d'impulsions émises dans un sous procédé d'acquisition des n impulsions lumineuses reflétées d'un plan profond dans la scène à étudier est supérieur ou égal au nombre rn d'impulsions émises dans un sous procédé d'acquisition de ces rn impulsions lumineuses reflétées d'un plan moins profond.

5. Procédé d'imagerie 3D d'une scène à étudier suivant l'une quelconque des revendications 3 et 4, **caractérisé en ce que** le nombre d'impulsions émises d'un sous-procédé est fonction de la profondeur du plan dont ledit sous-procédé permet l'acquisition via les impulsions lumineuses reflétées.

6. Procédé d'imagerie 3D d'une scène à étudier suivant l'une quelconque des revendications 1 à 4, **caractérisé en ce que** les sous-procédés sont exécutes dans un ordre décroissant de la profondeur des plans à étudier de la scène.

## Patentansprüche

1. Verfahren zur Bilderzeugung in 3D einer zu studierenden Szene durchgeführt von einer Vorrichtung mit Mittel zur Erzeugung eines Lichtpulses, mit einer Matrix Cₙ von opto-elektronischen Sensoren, dazu geeignet, dass jeder Sensor ein repräsentatives Signal der erhaltenen reflektierten Lichtpulse erzeugen kann, mit Mittel zur Verarbeitung dieses Signals, mit einem Pufferspeicher, wobei eine spezielle Adresse An mit jedem der Sensoren Cₙ verbunden ist und einem Bildspeicher; Verfahren **dadurch gekennzeichnet, dass** es folgendes enthält:
- einen Schritt zur Bestimmung von f verschiedenen Flugzeiten, die mit f verschiedenen Tiefen des zu studierenden Planes übereinstimmen und mit einer bestimmten Farbe für jede Flugzeit verbunden sind, dann, nacheinander, für jede dieser bestimmten Flugzeiten folgendes Unter-verfahren zu gewährleisten:
- einen Lichtpuls (1, 2, 3, 4) in Richtung der zu studierenden Szene mit den Mittel zur Erzeugung eines Lichtpulses auszustrahlen;
- den von der zu studierenden Szene reflektierten Lichtpuls aufzufangen, nur für diese Flugzeit, mit der Matrix von opto-elektronischen Sensoren, dazu geeignet, dass jeder ein repräsentatives Signal des erhaltenen reflektierten Lichtpulses erzeugen kann;
- jedes generierte Signal, das repräsentativ der Intensität des Lichtpulses ist, zu integrieren in Abhängigkeit von der Dauer des Lichtimpulses (1, 2, 3, 4);
- mit den besagten Mitteln zur Verarbeitung, das Niveau des integrierten Signal der Intensität des von jedem Sensor erhaltenen Lichtpuls mit einem vorgegebenen Schwellenwert zu vergleichen;
- in den Pufferspeicher (10), an den zugeordneten Adressen der Sensoren, die den reflektierten Lichtpuls mit einem höheren Wert als den besagten Schwellenwert aufgefangen und integriert haben, einen repräsentativen Wert der zugeordneten Farben für diese Flugzeit des aufgefangenen Lichtpulses zu speichern;
- die Adressen des Pufferspeichers (10), der diesen repräsentativen Wert der zugeordneten Farbe für diese Flugzeit speichert, zu verriegeln;
- am Ende des letzten Unter-Verfahrens die Daten vom Pufferspeicher zum Bildspeicher zu transferieren und diesen Bildspeicher auf einem Bildschirm vorzuführen.

2. Verfahren zur Bilderzeugung in 3D einer zur studierenden Szene nach Anspruch 1, **dadurch gekennzeichnet, dass** in jedem Unter-Verfahren ein einzelner Lichtpuls durch die Mittel zur Erzeugung ausgestrahlt wird und ein einzelner reflektierten Lichtpuls durch die Matrix von opto-elektronischen Sensoren aufgefangen wird.

3. Verfahren zur Bilderzeugung in 3D einer zur studierenden Szene nach Anspruch 1, **dadurch gekennzeichnet, dass** für mindestens eines der Unter-Verfahren n Lichtpulse ausgestrahlt werden und n von der zu studierenden Szene zur einer bestimmten Flugzeit reflektierte Lichtpulse aufgefangen werden, mit n> 1.

4. Verfahren zur Bilderzeugung in 3D einer zur studierenden Szene nach Anspruch 3, **dadurch gekennzeichnet, dass** die Zahl n der ausgestrahlten Pulse in einem Unter-Verfahren zur Erfassung der n reflektierten Lichtpulse eines tiefen Plans in der zu studierenden Szene grösser oder gleich zur Zahl m der ausgestrahlten Pulse in einem Unter-Verfahren zur Erfassung dieser m reflektierten Lichtpulse eines nicht so tiefen Planes ist.

5. Verfahren zur Bilderzeugung in 3D einer zur studierenden Szene nach einem beliebigen der Ansprüche 3 und 4, **dadurch gekennzeichnet, dass** die Zahl der ausgestrahlten Pulse eines Unter-Verfahrens von der Tiefe des Planes abhängig ist, dessen besagtes Unter-Verfahren die Erfassung über die reflektierten Lichtpulse ermöglicht.

6. Verfahren zur Bilderzeugung in 3D einer zur studierenden Szene nach einem beliebigen der Ansprüche 1 bis 4, **dadurch gekennzeichnet, dass** die Unter-Verfahren in einer absteigende Ordnung der Tiefe der Plane der zu studierende Szenen durchgeführt sind.

## Claims

1. Process of 3D imaging of a scene to be studied operated by a device containing ways of generation of a luminous pulse, a matrix of Cₙ opto-electronic sensors capable each to generate a representative signal of the intensity of the reflected luminous pulses which it received, ways of processing of this signal, a buffer memory a particular An address of which is associated with each of the Cₙ sensors and an image memory, process **characterized in** what it contains:
- a stage consisting in defining f different time of flight corresponding to f various depths of the plan to study and to associate a particular color to each of the f time of flight, then, successively, for each of these defined times of fight, to assure following under process :
- emitting luminous pulses (1, 2, 3, 4) in a direction of a scene to be studied with ways of generation of a luminous pulse;
- collecting the luminous pulse reflected by the scene to be studied, only for this time of fight, with the matrix of opto electronic sensors capable each to generate a representative signal of the intensity of the luminous pulse which it received;
- integrating every representative generated signal of the intensity of the luminous pulses according to the duration of the luminous pulses (1, 2, 3, 4);
- comparing, with the aforementioned ways of treatment, the signal level integrated of the luminous intensity got by every sensor in a preset threshold value;
- storing in the buffer memory (10), at the addresses associated with the sensors having captured and integrated the luminous pulse reflected with a value superior to the aforementioned threshold value, a representative value of the color associated with this time of fight of the got luminous pulse ;
- blocking the addresses from the buffer memory (10) storing this representative value of this color associated with this time of fight;
- transferring the data from the buffer memory to the image memory at the end of the last under process and show this image memory on a screen.

2. Process of 3D imaging of a scene to be studied according to claim 1, **characterized in that** in each under process, a single luminous pulse is emitted by the ways of generation of a luminous pulse and a single reflected luminous pulse is got by the matrix of opto-electronic sensors.

3. Process of 3D imaging of a scene to be studied according to claim 1, **characterized in that** for at least one of the under processes, n luminous pulses are emitted and n luminous pulses reflected by the scene to be studied in a determined time of fight are collected and integrated, with n> 1.

4. Process of 3D imaging of a scene to be studied according to claim 3 **characterized in that** the number n of pulses emitted in one under process of acquisition of n luminous pulses reflected of a deep plan in the scene to be studied is upper or equal to the number m of pulses emitted in one under process of acquisition of these m luminous pulses reflected of a less deep plan.

5. Process of 3D imaging of a scene to be studied according to claim 3 or 4, **characterized in that** the number of pulses emitted of an under process is function of the depth of the plan the aforementioned under process of which allows the acquisition via the reflected luminous pulses.

6. Process of 3D imaging of a scene to be studied according to claim 1 or 2 or 3 or 4, **characterized in that** the under processes are executed in a decreasing order of the depth of the plans to be studied of the scene.
